# EUROPEAN PATENT APPLICATION

(11) **EP 0 999 427 A1**
(43) Date of publication of application: **10.05.2000**
(21) Application number: 99308766.7
(22) Date of filing: 04.11.1999
(51) Int. Cl.: G01B 7/004, G01B 21/04

(54) **A method of determining body features**

(30) Priority: 04.11.1998 GB 9824093
(71) Applicant: Rover Group Limited, Warwick CV34 6RG (GB)
(72) Inventor: Brownhill, Colin Arthur, Willenhall, West Midlands WV12 4QW (GB); Priest, Royston James, Brierley Hill, West Midlands (GB)
(74) Representative: Farrow, Robert Michael

(57) **Abstract**

A method of determining body features is disclosed, such body features comprising for example slots 12 or holes 30, 32 in a vehicle body shell 10. The method includes synthetically moving the plane of measurement of each feature 12, 30, 32 into a predetermined plane +Y. In this way, each feature can be assessed independently of the orientation of the plane in which it actually lies.

## Description

This invention relates to methods of determining body features and in particular, but not exclusively, to a method of determining body features of a vehicle body shell.

It is known to provide a method of determining features of a workpiece, such as orifices and intersections, so as to determine their positional and/or dimensional accuracy. One such arrangement is disclosed in DE 4006949, in which a system is provided to efficiently control the movement of a detection probe between scanned points.

In EP 0482672, an arrangement is disclosed for determining the nature of a feature, e.g. whether it comprises intersections such as, for example, a flange or whether it is an orifice such as a hole or slot. In this arrangement, the parameters which define the nature of the feature are used for later measurement of a similar feature on another body.

Some such prior art systems measure the features with respect to a datumned co-ordinate system in three axis, e.g. X-axis, Y-axis and Z-axis. In some bodies, not all features will lie in any one plane and so some such systems develop a fourth axis which moves the probe so that it is substantially perpendicular to the feature to be measured. The angle used to present the probe to the workpiece on this fourth axis is known for convenience as the vector angle.

An example of such a body might be the body shell of a vehicle, in which mounting holes, slots or panel intersections lie in planes away from the normal X-, Y- and Z-axis for reasons of styling or function. This causes a problem when performing dimensional analysis of these bodies for conformity to the original design tolerances.

In setting up a co-ordinate measuring machine (CCM) to assess the features and their conformity, it is necessary to include correction factors to establish the fourth axis and these correction factors have to be different for features which are dimensionally substantially identical but lie in different planes. Programming measurement parameters for the CCM then becomes lengthy and complicated, as each feature must be individually programmed.

It is an object of this invention to provide an improved method of determining body features.

Accordingly, the invention provides a method of determining body features, the method including the steps of:
a) determining within a predetermined co-ordinate system the co-ordinates which define the actual orientation of a plane in a body in which a feature lies; and
b) applying correction factors to the co-ordinates to synthetically move the plane into a predetermined plane of orientation;
such that the feature can be dimensionally and/or positionally assessed in the predetermined plane, substantially independently of the orientation of the plane in which it actually lies.

The method may include synthetically moving the planes in which each of a plurality of features lie into said predetermined plane, so that all those features can be dimensionally and/or positionally assessed as if they were all lying in the same plane.

The method may include applying the correction factors in the form of rotation angles applied to the co-ordinate system.

The method may include developing a vector angle, using the co-ordinate system, for a fourth axis of a feature and applying the rotation angles to the vector angle.

The method may include applying an obstruction correction factor to the vector angle to off-set the vector axis away from the true fourth axis, so as to take account of an obstruction which might obstruct the true fourth axis.

The method may include determining and/or applying the correction factors on-line or off-line.

The method may include providing a measurement direction rotation angle which defines the direction in which a feature is to be measured, the measurement direction rotation angle being provided on-line or off-line.

The method may include interrupting a measurement routine if an error is detected in positioning a measurement probe at a start point in the region of a feature or if a realistic measurement of the feature is not obtained, prompting a user to position the probe in substantially the correct position for said measurement routine and thereafter performing said measurement routine for that feature by starting from the user positioned start point.

The method may include producing a signal indicative of errors between the actual dimensional and/or positional assessment of a feature and its nominal dimension/position.

The method may include storing the correction factors and applying them to a later measured similar body in a stored and/or adapted form.

The invention will now be described by way of example only and with reference to the accompanying drawings, in which:

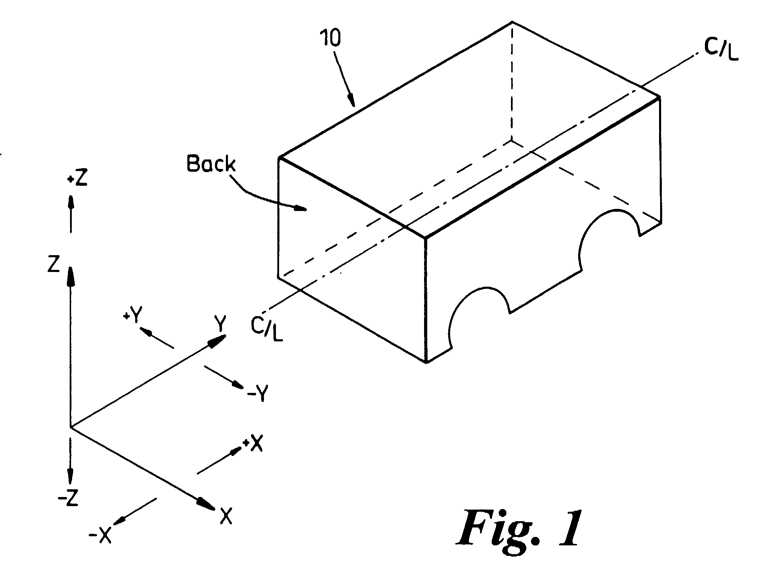

Figure 1 is a representation of a body at least one of whose features is to be dimensionally and/or positionally assessed;
Figure 2 is a diagrammatic representation of part of the process of assessing a feature of the body of Figure 1;
Figure 3 is a diagrammatic representation of part of the process of assessing a further feature of the body of Figure 1;
Figure 4 is a diagrammatic representation of part of the process of assessing a further feature of the body of Figure 1;
Figure 5 is a flow diagram of part of a method used in assessing features of the body of Figure 1; and
Figure 6 is a flow diagram of another part of a method used in assessing features of the body of Figure 1.

It is a clear requirement, with regard to bodies which are produced in series and used within subsequent manufacturing processes, that the shape and the positions of structural features are consistent or within acceptable tolerance bands. Thus, with regard to vehicle bodies, it will be appreciated that not only must the body meet the aesthetic design and proportioning necessary to form the eventual vehicle, but also must incorporate various apertures, slots, channelling and intersections of surfaces about which substantially automated processes will be conducted to secure and assemble the vehicle.

Typically, one body will be selected from a production batch in order to determine accurately the shape within the desired envelope, along with the positions of structural features, so as to effect an analysis of shape consistency and structural feature position for each body.

This invention relates to locating and assessing structural features within a body, such as the body of a vehicle, and these structural features include for example apertures, holes or slots along with contour profiling about rebates, panel intersections and channelling typical of window seals.

Previously, an interrogation and measurement probe has been presented to that vehicle body in order to locate the structural features. Normally, this interrogation probe is advanced towards the structural feature and operated iteratively to determine sufficient data points for the location of that structural feature. Thus, for example, with regard to an aperture slot the interrogation probe will be advanced towards that aperture and if it hits a solid surface will be retreated and will try again in an iterative process at a slightly displaced position until the slot is found, whereupon the interrogation probe will be manipulated to acquire data points descriptive of the feature and its position. Similarly, with regard to a surface contour, the interrogation probe will be advanced to the surface and moved thereabouts in order to acquire the necessary data points to determine position and conformity.

Clearly, without actual knowledge of the structural feature position, the interrogation probe may be advanced into contact with the body in such a manner that the probe strikes the body with sufficient force that it is jarred and so may give slightly erroneous responses. In fact, the inherent bumping of the interrogation probe will lead to errors in that probe over time and so sophisticated systems are necessary to both diminish the possibility of bump-induced error along with damage to the body and the probe itself.

One way of reducing the possibility of interrogation probe inaccuracy and damage is to predict expected structural feature position. However, it will be appreciated that such predictions may be made on a theoretical basis and might not always take account of actual current manufacturing conditions for the body or presentation thereof.

The reader is referred to DE 4006949 and to EP 0482672 for general examples of the sort of body measurement techniques which have been employed to try and improve co-ordinate measurement techniques. These documents can provide useful information for a general understanding of current techniques and their disclosure is included by way of reference as background information to the improvements provided by this invention.

Referring now to the figures, a co-ordinate system is adopted for the measurement and dimensional/positional assessment of features of a body, in this case a vehicle body shell 10. The co-ordinate system adopted is based on the known X, Y, Z-axis arrangement.

The Y-axis passes along a centre line C/L from the back of the body 10 and measurements taken in the Y-plane are defined according to plus-axis-Y (+Y) and minus-axis-Y (-Y). +Y indicates measurements taken looking outwards towards the left-hand side of the body 10 and -Y indicates measurements taken looking outwards towards the right-hand side of the body. In similar fashion, plus- and minus-axis measurements are defined for the X and Z axis.

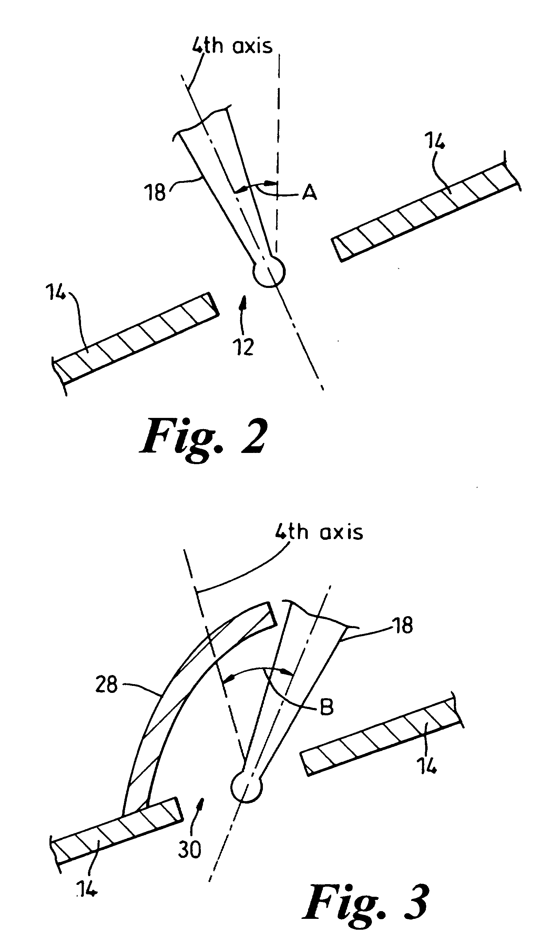

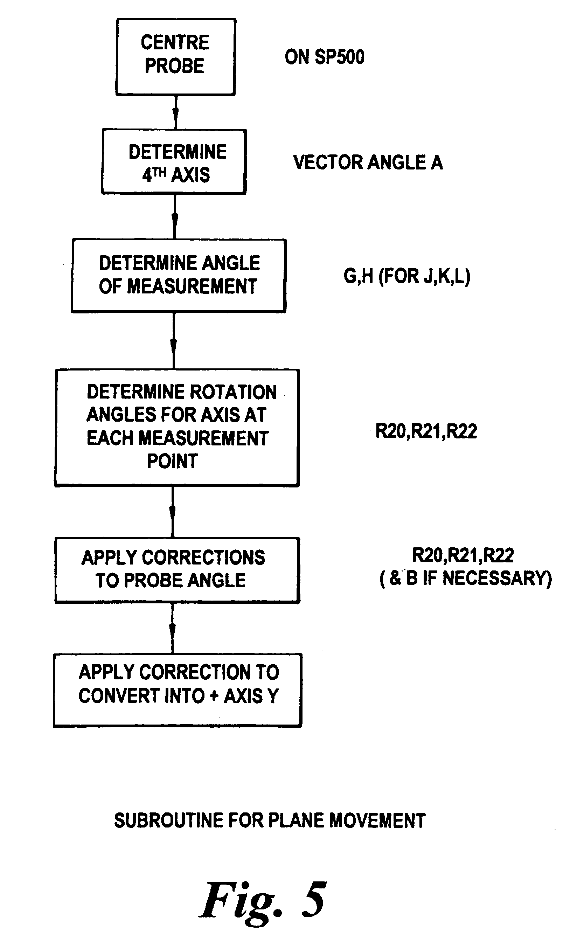

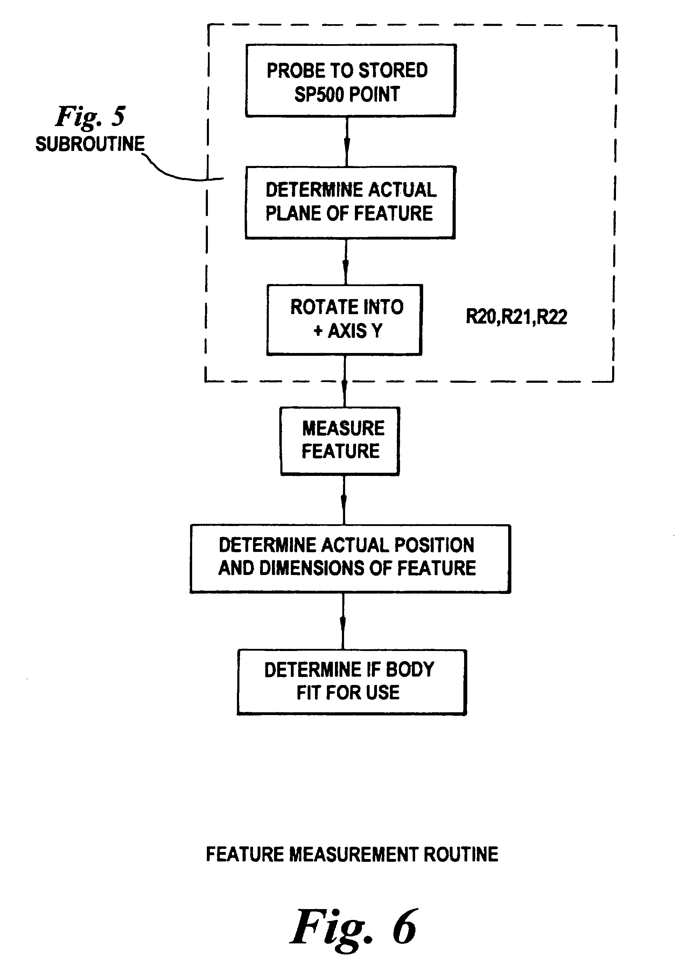

Such body shells 10 often include a multitude of intersections and orifices and the dimensional analysis of three possible such features are now described with reference to Figures 2 to 4 in turn, each with reference simultaneously to Figures 5 and 6.

In Figure 2, a feature in the form of a slot 12 is shown, which lies in a body panel 14 in a plane 16 at an incline to one or more of the normal X, Y, Z-axis. A vector angle A is developed to bring a measurement probe 18 onto a fourth axis which is incident to the slot 12. The probe 18 can now perform a measurement routine to assess the dimensional and/or positional accuracy of the slot 12.

In order to perform such an assessment, a co-ordinate measuring machine (CCM) (not shown) which operates the probe 18 must be programmed with a set of feature measurement parameters which define each feature and how it is to be measured. Such parameters may include the dimensions of the feature, e.g. for slot 12 these might be slot length and slot width. The parameters may also include the distance from the feature at which the probe 18 should be to set up the fourth axis. To measure the feature, the feature measurement parameters also include the depth of penetration (orifices) or stand-off distance (solids/intersections), the back-off distance from the feature during probe movements while taking points to set up the fourth axis and the rate at which the probe 18 approaches aspects of the feature.

It should be noted that these feature measurement parameters are dependent on the nature of the feature itself and not on the plane of inclination. Correction factors are applied to the vectoring of the probe 18 within the co-ordinate system, in order to bring it into the fourth axis and these correction factors mean that the feature measurement parameters will differ between substantially identical features which lie on different planes. This is where a problem lies in some prior art systems, because in such systems it becomes necessary to individually programme the feature measurement parameters for a multitude of features, many of which might be dimensionally the same.

The present invention alleviates these problems by applying correction factors within the co-ordinate system which synthetically move the plane of each feature to be measured into a same and predetermined plane of orientation. For consistency of description only, the plane into which all features are moved for assessment in the examples described herein is plus-axis-Y, although it will be apparent that any plane could be chosen so long as it was the same for a chosen batch of features.

The advantage of moving all the features, or all those of a batch, into the same plane for assessment is that the features can be assessed independently of the plane in which they lie and that therefore the measurement parameters can be kept constant for identical or similar features. This saves programming time, memory space and program running time.

Separate subroutines can be used to move the planes of orifices and intersections. The appropriate such subroutine is run for each feature and will therefore also move the plane of a unique feature into plus-axis-Y. This is still advantageous, because certain measurement parameters can then be kept constant if desired between all feature within the same subroutine, e.g. back-off distance between movements setting up the fourth axis.

The correction factors used to move each plane into plus-axis-Y are provided as rotation angles which are applied to the normal X, Y, Z-axis after the development of the vector angle and are called here for convenience R20, R21, R22 for the X-, Y- and Z-axis respectively. It should be noted that there may be no vector angle, e.g. if the feature lies on the X- or Z-axis. In such a case, rotation angles would still be applied so as to bring the plane of the feature into plus-axis-Y.

The correction factors for the vector angle and/or the rotation angle R20, R21, R22 can be applied off-line or on-line. To apply the rotation angle off-line, R20, R21, R22 could be obtained from a computer aided design system and would be developed in a similar manner to that described below for a manual interrogation.

To obtain the rotation angles on-line by manual interrogation, a user would drive the probe 18 to the centre of the feature and store the point. This stored point, called here for convenience SP500, would be used as the start point for a measurement routine for that point. The user next drives the probe 18 to several points surrounding the feature, e.g. three or four points on the surface defining the plane in which the feature lies. These points define the inclination of the feature's plane and set up the fourth axis. The user then moves the probe to define the direction of measurement of the feature and so develops a measurement direction rotation angle and this aspect is described in greater detail below with particular reference to Figure 3.

These points now define the feature and the plane in which it actually lies and, from this, conventional geometry is used to calculate the rotation angles R20, R21, R22 to bring this feature into plus-axis-Y.

Once a map of rotation angles R20, R21, R22 has been developed for each desired assessment feature of a body, the features are all measured as if the probe 18 were to be looking in a single direction (+Y) and the program can be used on later measured similar bodies to rapidly assess dimensional and positional accuracy of a plurality of features and to provide a signal indicative of error between the actual dimensional and/or positional assessment of one or more features with respect to their nominal dimension/position. The method can therefore be used to determine if a body is fit for use.

When performing the measurement routine for a feature, if an error is detected in positioning the probe 18 at a start point, or if an unrealistic/implausible measurement is obtained, the routine is interrupted. The user is given an error message and is prompted to move the probe 18 substantially to the start point for that particular feature. The user then restarts the routine and it runs on from that user positioned start point, i.e. the SP500 for that particular feature, and runs the assessment as normal.

Referring now in particular to Figures 2, 5 and 6, in a further aspect of the invention, a further correction factor is developed and used to shift the vector axis if an obstruction 18 hinders the probe 18 from actually adopting the true fourth axis. This correction factor is developed as an obstruction correction factor and sets up an off-set vector axis to allow the probe 18 to measure the feature off-set from the fourth axis, e.g. hole 30, at an obstruction factor angle B. In common with the other correction factors, this can be developed on-line or off-line and could also be used if any particular feature were to prove difficult to reach under other circumstances. This aspect of the invention increases the flexibility of the method in dealing with obstructed features, as it is no longer essential to present the probe substantially exactly along the fourth axis.

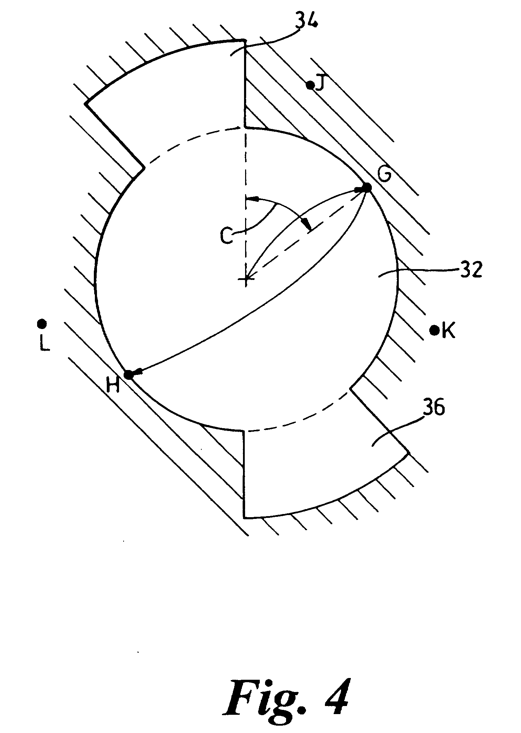

Referring now in particular to Figures 4, 5 and 6 in a further aspect of the invention, a feature is a hole 32 which has cut-outs 34, 36. The probe 18 should avoid these 34, 36 when measuring the diameter of this hole 32, or developing its fourth axis, so as to prevent a false result. This is achieved by holding the X and Z-axis constant and rotating the Y-axis so as to define the places at which the probe 18 will touch the sides of the hole 32 to measure it. The rotation of the Y-axis is implemented, on-line or off-line, by touching the probe 18 on preferred points G, H on the side of the hole 32. The order of touching G, H will also define the order of measurement points J, K, L for the feature measurement, and the amount by which the Y-axis is turned, e.g. from the vertical, is known as the measurement direction rotation angle (C).

It will be apparent that, although the features described with reference to Figures 2 to 4 are all orifices, similar techniques can be applied to intersections and solid features by altering the nature of the feature measurement parameters. Whatever the feature, the principle remains the same, in that correction factors are applied to synthetically move the feature into a predetermined plane (e.g. +Y) so that it can be assessed independently of the plane in which it actually lies.

## Claims

1. A method of determining body features, the method including the steps of:
a) determining within a predetermined co-ordinate system (X, Y, Z) the co-ordinates which define the actual orientation of a plane in a body (10) in which a feature (12; 30; 32) lies; and
b) applying correction factors (R20, R21, R22) to the co-ordinates to synthetically move the plane into a predetermined plane (+Y) of orientation;
such that the feature (12, 30, 32) can be dimensionally and/or positionally assessed in the predetermined plane (+Y), substantially independently of the orientation of the plane in which it actually lies.

2. A method according to Claim 1, including synthetically moving (R20, R21, R22) the planes in which each of a plurality of features (12; 30; 32) lie into said predetermined plane (+Y), so that all those features (12; 30; 32) can be dimensionally and/or positionally assessed as if they were all lying in the same plane (+Y).

3. A method according to Claim 1 or Claim 2, including applying the correction factors in the form of rotation angles (R20, R21, R22) applied to the co-ordinate system (X, Y, Z).

4. A method according to Claim 3, including developing a vector angle (A) using the co-ordinate system (X, Y, Z), for a fourth axis of a feature (12; 30; 32) and applying the rotation angles (R20, R21, R22) to the vector angle (A).

5. A method according to Claim 4, including applying an obstruction correction factor (B) to off-set the vector axis away from the true fourth axis, so as to take account of an obstruction (28) which might obstruct the true fourth axis.

6. A method according to any preceding claim, including determining and/or applying the correction factors (R20, R21, R22) on-line.

7. A method according to any one of Claims 1 to 5, including determining and/or applying the correction factors (R20, R21, R22) off-line.

8. A method according to any preceding claim, including providing a measurement direction rotation angle (C) which defines the direction in which a feature (12; 30; 32) is to be measured, the measurement direction rotation angle (C) being provided on-line or off-line.

9. A method according to any preceding claim, including interrupting a measurement routine if an error is detected in positioning a measurement probe (18) at a start point (SP500) in the region of a feature (12; 30; 32) or if a realistic measurement of the feature (12; 30; 32) is not obtained, prompting a user to position the probe (18) in substantially the correct position for said measurement routine and thereafter performing said measurement routine for that feature (12; 30; 32) by starting from the user positioned start point (SP500).

10. A method according to any preceding claim, including producing a signal indicative of errors between the actual dimensional and/or positional assessment of a feature (12; 30; 32) and its nominal dimension/position.

11. A method according to any preceding claim, including storing the correction factors (R20, R21, R22) and applying them to a later measured similar body (10) in a stored and/or adapted form.
